# EUROPÄISCHE PATENTSCHRIFT

(11) **EP 4 073 137 B1**
(45) Veröffentlichungstag und Bekanntmachung des Hinweises auf die Patenterteilung: **21.08.2024**
(21) Anmeldenummer: 19829477.9
(22) Anmeldetag: 13.12.2019
(51) Int. Cl.: C08G 18/71, C08G 65/336, C08L 71/02

(54) **VERFAHREN ZUR HERSTELLUNG VON ORGANYLOXYSILANTERMINIERTEN POLYMEREN**
METHOD FOR PRODUCING ORGANYLOXYSILANE-TERMINATED POLYMERS
PROCÉDÉ DE PRODUCTION DE POLYMÈRES À TERMINAISON ORGANYLOXYSILANE

(43) Veröffentlichungstag der Anmeldung: 19.10.2022
(73) Patentinhaber: Wacker Chemie AG, 81671 München (DE)
(72) Erfinder: STANJEK, Volker, 84539 Ampfing (DE); ZANDER, Lars, 84503 Altötting (DE)
(74) Vertreter: Mieskes, Klaus Theoderich
(86) Internationale Anmeldenummer: PCT/EP2019/085139
(87) Internationale Veröffentlichungsnummer: WO 2021/115621

(56) Entgegenhaltungen:
- EP-A1- 1 896 523
- EP-A1- 3 546 468
- DE-A1- 102007 006 147

## Beschreibung

Die Erfindung betrifft ein Verfahren zur Herstellung von organyloxysilanterminierten Polymeren sowie deren Verwendung zur Herstellung von Kleb- und Dichtstoffen.

Polymersysteme, die über reaktive Alkoxysilylgruppen verfügen, insbesondere silanterminierte Polyether, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

Zur Produktion von kommerziell erhältlichen Produkten sind drei unterschiedliche Verfahren zur Herstellung von silanterminierten Polymeren von besonderer Bedeutung. Dabei zeichnen sich jedoch alle drei Verfahren durch jeweils spezifische Nachteile bzw. Probleme aus:
1. Die Herstellung von sogenannten silanterminierten Polyurethanen aus Polyethern, Diisocyanaten und aminoalkylfunktionellen Silanen. Nachteilig an diesem Verfahren ist die gleichzeitig auftretende Kettenverlängerung, da ein Teil der eingesetzten Diisocyanate mit beiden Isocyanatgruppen mit einem Polyethermolekül reagiert, wodurch dimerisierte Polymere mit doppelter Molmasse gebildet werden. Dies führt zu einer Erhöhung der Polydispersität M_{w}/Mₙ, was wiederum zur Folge hat, dass die entsprechenden Produkte bezogen auf ihre mittlere Molmasse Mₙ eine vergleichsweise hohe Viskosität aufweisen. Hohe Molmassen Mₙ sind dabei entscheidend, um möglichst gute mechanische Eigenschaften der ausgehärteten Materialien zu erreichen (z.B. eine hohe Reißfestigkeite in Kombination mit einer hohen Reißdehnung). Niedrige Viskositäten hingegen sind für eine möglichst gute Verarbeitbarkeit der flüssigen Kleb- oder Dichtstoffe wünschenswert. Somit stellt die fehlende Möglichkeit zur Herstellung von möglichst hochmolekularen silanterminierten Polymeren mit gleichzeitig möglichst niedriger Viskosität einen gravierenden Nachteil dar.
2. Herstellung von silanterminierten Polyethern durch eine Allylierung von dessen endständigen Hydroxylgruppen mit nachfolgender Hydrosilylierung der dabei gebildeten Allyl-Kettentermini. Nachteilig an diesem Verfahren ist die Tatsache, dass insbesondere die Hydrosilylierung nicht vollständig verläuft, so dass ein hoher Anteil nicht silanisierter und damit auch nicht vernetzungsfähiger Kettenenden erhalten wird. Das hat negative Auswirkung auf die mechanischen Eigenschaften der aus diesen Polymeren herstellbaren ausgehärteten Kleb- und Dichtstoffe.
3. Herstellung von silanterminierten Polyethern durch eine Reaktion von dessen endständigen Hydroxylgruppen mit isocyanatoalkyl-funktionellen Alkoxysilanen. Dieses Verfahren erlaubt eine nahezu vollständige Kettenterminierung, ohne dass gleichzeitig eine Kettenverlängerung auftreten würde, und vermeidet somit die Nachteile der beiden oben beschriebenen Systeme. Problematisch ist jedoch die Tatsache, dass die für dieses Verfahren benötigten isocyanatoalkyl-funktionellen Alkoxysilane in hohem Maße toxisch sind, weshalb sichergestellt werden muss, dass diese im Endprodukt, d.h. dem silanterminierten Polymer, nicht mehr vorhanden sind.

Im Stand der Technik sind verschiedene Verfahren beschrieben, wie dieses Problem gelöst und eventuelle Isocyanatreste im Endprodukt vermieden werden können. In EP-A 1535940 werden die Eduktverhältnisse so gewählt, dass das Isocyanatosilan unter den jeweils gewählten Reaktionsbedingungen vollständig abreagiert. Ein solches Verfahren ist jedoch fehleranfällig, da bereits geringe Dosierfehler entweder dazu führen, dass entweder zu viel dosiertes Isocyanatosilan im silanterminierten Polymer verbleibt oder zu wenig dosiertes Isocyanatosilan zu nicht silanisierten und damit nicht reaktiven Kettenenden führt, was letzten Endes nicht hinreichend konstante mechanische Eigenschaften der aus diesen Polymeren herstellten Kleb- und Dichtstoffe zur Folge hat.

Zur Lösung dieser Problematik wird in EP-A 1896523 vorgeschlagen, die silanterminierten Polymere in einem kontinuierlichen Verfahren herzustellen, bei dem das Isocyanatosilan im Überschuss eingesetzt wird und eventuell vorhandene nicht abreagierte Isocyanatosilan-Reste in einem nachfolgenden Schritt mit einer isocyanatreaktiven Verbindung, z.B. einem Alkohol oder einem Amin, abgefangen werden. Nachteilig an diesem Verfahren ist jedoch die Tatsache, dass das Abfangprodukt dieser Reaktion, ein monomeres urethan- bzw. harnstoffunktionelles Di- oder Trialkoxysilan, in der Reaktionsmischung verbleibt und somit die mechanischen Eigenschaften des ausgehärteten Endproduktes beeinflusst. Dialkoxysilane wirken dabei weichmachend, Trialkoxysilane hingegen erhöhen ob ihrer Fähigkeit zur Erhöhung der Netzwerkdichte die Härte.

DE 10 2007 006147 A1 offenbart ein Verfahren zur Herstellung von Silanen, die über eine Isocyanatfunktion verfügen, bei dem die Silane nach ihrer chemischen Herstellung aufgereinigt und nach der Aufreinigung ausschliesslich in einer Atmosphäre mit einer relativen Luftfeuchtigkeit unter 10 % gehandhabt werden.

EP 3 546 468 A1 offenbart ein Verfahren in vier Schritten, wobei im dritten Schritt i) das Sumpfmaterial ganz oder partiell aus der Spaltapparatur ausgeschleust, ii) thermisch behandelt und/oder aufgereinigt und/oder in Gegenwart von Alkohol einer Nachbehandlung unterzogen und iii) das entnommene Material nach thermischer Behandlung und/oder Aufreinigung und/oder Nachbehandlung in den zweiten oder dritten erneut zugeführt wird.

Mit Blick auf das Endprodukt, d.h. den fertig formulierten Kleb- oder Dichtstoff, kann dies im Einzelfall erwünscht, aber ebenso gut auch nicht erwünscht sein.

Aus Sicht eines Produzenten von silanvernetzenden Polymeren wäre es daher in jedem Fall wünschenswert, ein Produkt bereitstellen zu können, das weitgehend frei ist von zusätzlichen monomeren Silanen, so dass der Formulierer eines Kleb- oder Dichtstoffes die maximal mögliche Formulierungsfreiheit erhält und selbst entscheiden kann, ob bzw. welche monomeren Silane er seiner jeweiligen Endformulierung zusetzen möchte.

Aufgabe der Erfindung war es daher, ein Verfahren zur Herstellung von silanfunktionellen Polymeren bereitzustellen, das weder die oben geschilderten Nachteile des Standes der Technik noch weitere Nachteile, wie z.B. eine Verfärbung, aufweist.

Gegenstand der Erfindung ist ein Verfahren zur Herstellung von silanterminierten Polymeren (SP) der Formel (I)

Y-[O-C(=O)-NH-(CR¹₂)_{b}-SiRₐ(OR²)₃₋ₐ]ₓ (I),

dadurch gekennzeichnet, dass
in einem 1. Verfahrensschritt mindestens ein Polymer (OHP) der Formel (II)

Y-[OH]ₓ (II)

mit mindestens einem isocyanatfunktionellen Silan (IS) der Formel (III)

O=C=N-(CR¹₂)_{b}-SiRₐ(OR²)₃₋ₐ (III)

umgesetzt wird, mit der Maßgabe, dass die isocyanatfunktionellen Silane (IS) in einer Menge eingesetzt werden, dass auf jede Hydroxylgruppe in den Verbindungen (OHP) mindestens 1,05 Isocyanatgruppen in den Silanen (IS) kommen,
wobei
- Y: einen x-wertigen Polymerrest bedeutet,
- R: gleich oder verschieden sein kann und einen einwertigen, gegebenenfalls substituierten Kohlenwasserstoffrest darstellt,
- R¹: gleich oder verschieden sein kann und Wasserstoffatom oder einen einwertigen, gegebenenfalls substituierten Kohlenwasserstoffrest darstellt,
- R²: gleich oder verschieden sein kann und Wasserstoffatom oder einen einwertigen, gegebenenfalls substituierten Kohlenwasserstoffrest darstellt,
- x: eine ganze Zahl von 1 bis 50, bevorzugt 1, 2 oder 3, besonders bevorzugt 2, ist,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist,
anschließend in einem 2. Verfahrensschritt die nicht abreagierten Isocyanatgruppen der Silane (IS) in dem im 1. Verfahrensschritt erhaltenen Reaktionsgemisch mit mindestens einem Alkohol (A) der Formel (IV)

R³OH (IV),

umgesetzt werden, wobei
- R³: einen Kohlenwasserstoffrest mit 1 bis 4 Kohlenstoffatomen darstellt,
und anschließend in einem 3. Verfahrensschritt das im 2.

Verfahrensschritt erhaltene Reaktionsgemisch durch eine Verdampfungseinheit (VD) geleitet wird, in der das Reaktionsgemisch in einer Schichtdicke von maximal 5 cm einem Druck von höchstens 80 mbar und Temperaturen von höchstens 200°C ausgesetzt wird, wobei das im 2. Verfahrensschritt gebildete Carbamatosilan (CS) der Formel (V)

R**³**O-C(=O)-NH-(CR¹₂)_{b}-SiRₐ(OR²)₃₋ₐ (V),

bei der alle Variablen die oben genannte Bedeutung aufweisen, zumindest teilweise verdampft und entfernt wird.

Der Carbamatosilangehalt in der nach dem erfindungsgemäßen Verfahren erhaltenen Reaktionsmischung beträgt bevorzugt höchstens 0,3 Gew.-%, besonders bevorzugt höchstens 0,2 Gew.-%, insbesondere höchstens 0,1 Gew.-%, jeweils bezogen auf das Gesamtgewicht der Reaktionsmischung.

Der Carbamatosilangehalt wird dabei bevorzugt nach dem in Beispiel 2 beschriebenen Verfahren bestimmt.

Bei der erfindungsgemäß eingesetzten Verdampfereinheit (VD) kann es sich um alle bisher bekannten Verdampfereinheiten handeln, wie z.B. um einen Dünnschicht-, Fallfilm- oder Kurzwegverdampfer, die bevorzugt sind.

Im 3. Verfahrensschritt des erfindungsgemäßen Verfahrens liegt die bevorzugte Schichtdicke des Reaktionsgemischs bevorzugt in Form eines flüssigen Films in der Verdampfereinheit (VD) bevorzugt bei maximal 2 cm, besonders bevorzugt bei maximal 1 cm, insbesondere bei maximal 0,5 cm, ganz besonders bevorzugt bei maximal 0,3 cm.

Das Carbamatosilan (CS) ist prinzipiell sehr schwerflüchtig und kann zudem Wasserstoffbrückenbindungen mit den Urethangruppen des silanterminierten Polymers (SP) eingehen. Daher kann es mittels einer herkömmlichen Destillation, in der die Reaktionsmischung enthaltend das Polymer (SP) und das Carbamatosilan (CS) in einem Laborkolben oder Produktionskessel gerührt wird, nicht innerhalb einer akzeptablen Zeitspanne entfernt werden. Dies gilt auch dann, wenn die Destillation bei hohen Sumpftemperaturen und sehr gutem Vakuum durchgeführt wird. Gleichzeitig besteht das Problem, dass hohe Sumpftemperaturen zu unerwünschten Nebenreaktionen, z.B. zu Verfärbungen und/oder zu einem teilweisen Abbau des Polymers (SP) führen.

Umso überraschender war die Entdeckung, dass sich das Carbamatosilan (CS) nach dem erfindungsgemäßen Verfahren in der erfindungsgemäß eingesetzten Verdampfereinheit auch unter erstaunlich milden Bedingungen problemlos aus der Reaktionsmischung entfernen lässt.

Beispiele für Reste R sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der **α**- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Rest R³ sind Methyl-, Ethyl-, n-Propyl- oder i-Propylreste.

Bevorzugt handelt es sich bei Rest R³ um den Methyl- oder Ethylrest, besonders bevorzugt um den Methylrest.

Sofern möglich, ist es vorteilhaft, wenn die Reste R² und R³ identisch sind, da ansonsten ein Austausch der Alkoxygruppen an den in Formel (I) dargestellten Alkoxysilangruppen nicht ausgeschlossen werden kann. Daher stellen identische Reste R² und R³ eine bevorzugte Ausführung der Erfindung dar.

Die Reste Y weisen vorzugsweise zahlenmittlere Molmassen Mₙ von mindestens 200 g/mol, besonders bevorzugt von mindestens 500 g/mol, insbesondere von mindestens 1 000 g/mol auf. Die Reste Y weisen vorzugsweise zahlenmittlere Molmassen Mₙ von höchstens 40 000 g/mol, insbesondere von höchstens 25 000 g/mol, insbesondere von höchstens 20 000 g/mol, auf.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Beispiele für Polymerrest Y sind organische Polymerreste, deren zahlenmittlere Molekülmasse 200 bis 40 000 g/mol beträgt und die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten.

Bevorzugt handelt es sich bei dem Polymerrest Y um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste, mit der Maßgabe, dass deren zahlenmittlere Molekülmasse 200 bis 40 000 g/Mol, insbesondere bevorzugt 6000 bis 22 000 g/Mol, beträgt.

Die Struktur der erfindungsgemäß einzusetzenden Polymere (OHP) ergibt sich aus den oben beschriebenen möglichen sowie bevorzugten Bedeutungen für die Reste Y. Bevorzugt handelt es sich bei den einzusetzenden Polymeren (OHP) um Polyurethane oder Polyether, bevorzugt mit einer Viskosität von 10 bis 1 000 000 mPas, besonders bevorzugt von 1000 bis 300 000 mPas. Insbesondere bevorzugt handelt es sich um Polypropylenglycole, bevorzugt mit einer Viskosität von 1000 bis 40 000 mPas.

Die Viskosität wird im Rahmen der vorliegenden Erfindung nach einer Temperierung auf 23°C mit einem DV 3 P-Rotationsviskosimeter von Fa. A. Paar (Brookfieldsysteme), unter Verwendung von Spindel 5 bei 2,5 UPM entsprechend der ISO 2555 bestimmt.

Die erfindungsgemäß eingesetzten Polymere (OHP) sind handelsübliche Produkte bzw. können nach in der Polymerchemie gängigen Verfahren hergestellt werden.

Bei den erfindungsgemäß eingesetzten isocyanatfunktionellen Silanen (IS) handelt es sich vorzugsweise um OCN(CH₂)₃-Si(OCH₃)₃, OCN(CH₂)₃-Si(OC₂H₅)₃, OCN(CH₂)₃-Si(OCH₃)₂CH₃, OCN(CH₂)₃-Si(OC₂H₅)₂CH₃, OCN(CH₂)-Si(OCH₃)₃, OCN(CH₂)-Si(OC₂H₅)₃, OCN(CH₂)-Si(OCH₃)₂CH₃ oder OCN(CH₂)-Si(OC₂H₅)₂CH₃, wobei OCN(CH₂)₃-Si(OCH₃)₃ oder OCN(CH₂)-Si(OCH₃)₂CH₃ besonders bevorzugt sind.

Die erfindungsgemäß eingesetzten Silane (IS) sind handelsübliche Produkte bzw. können nach in der Chemie gängigen Verfahren hergestellt werden.

Vorzugsweise wird das Isocyanatosilan (IS) im 1. Verfahrensschritt in einer Menge eingesetzt, dass auf jede Hydroxylgruppe des Polymers (OHP) mindestens 1,10, besonders bevorzugt mindestens 1,15, Isocyanatgruppen in den Verbindungen (IS) kommen.

Der 1. und der 2. Verfahrensschritt werden vorzugsweise in Gegenwart eines Katalysators (K) durchgeführt. Dabei können sämtliche Katalysatoren eingesetzt werden, die auch bisher zur Katalyse von Isocyanaten mit Alkoholen Verwendung finden.

Bevorzugte Beispiele für die erfindungsgemäß gegebenenfalls eingesetzten Katalysatoren (K) sind bismuthaltige Katalysatoren wie Bismuthcarboxylate wie Bismuth-(2-ethylhexanoat), Bismuth-neodecanoat oder Bismuth-tetramethylheptandionat, Katalysatoren, die neben Bismut auch noch weitere Metalle enthalten, insbesondere Bismut-Zink-Mischkatalysatoren, zinnhaltige Katalysatoren wie Dioctylzinndilaurat, Dioctylzinnoxid, Dioctylzinn-bis(acetylacetonat), Dibutylzinndilaurat, Dibutylzinnoxid, Dibutylzinn-bis(acetylacetonat), zirkoniumhaltige Katalysatoren wie Zirkoniumacetylacetonate, eisenhaltige Katalysatoren wie Eisenacetylacetonat sowie auch die Acetylacetonate weiterer Metalle.

Besonders bevorzugt handelt es sich bei die erfindungsgemäß gegebenenfalls eingesetzten Katalysatoren (K) um Carboxylate des Bismuts, wobei Bismuth-(2-ethylhexanoat), Bismuth-neodecanoat oder deren Mischungen besonders bevorzugt sind.

Beispiele für kommerziell erhältliche Katalysatoren (K) sind Borchi^{®} Kat 22, Borchi^{®} Kat VP 0243, Borchi^{®} Kat VP 0244 oder OMG 315 (alle OMG-Borchers), Bi-Neodecanoat der Firmen Chemos oder American Elements, Reaxis MSA 70 oder Reaxis C 719 der Fa. Reaxis, BICAT^{®}-Katalysatoren (The Shepherd Chemical Company, USA) und K-Kat^{®} K-348 (KING INDUSTRIES, INC., USA).

In dem erfindungsgemäßen 1. und 2. Verfahrensschritt werden Katalysatoren (K) in Mengen von bevorzugt 1 bis 1000 Gew.-ppm, besonders bevorzugt 20 bis 600 Gew.-ppm, insbesondere 60 bis 400 Gew.-ppm, eingesetzt. Die Angabe Gew.-ppm beschreibt dabei 1 Gewichtsteil Katalysator (K) pro 1 000 000 Gewichtsteilen Reaktionsmischung. Falls der 1. und 2. Verfahrensschritt in Anwesenheit von Katalysatoren (K) durchgeführt wird, werden diese vorzugsweise während des 1. Verfahrensschrittes zugegeben. Beim 2. Verfahrensschritt erfolgt vorzugsweise keine erneute Katalysatorzugabe, da der im 1. Verfahrensschritt zugegebene Katalysator (K) beide Verfahrensschritte katalysieren kann.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Der erfindungsgemäße 1. Verfahrensschritt wird vorzugsweise bei Temperaturen zwischen 20°C und 180°C, besonders bevorzugt zwischen 40°C und 150°C, insbesondere zwischen 50°C und 120°C durchgeführt.

Der erfindungsgemäße 2. Verfahrensschritt wird vorzugsweise bei Temperaturen zwischen 20°C und 160°C, besonders bevorzugt zwischen 30°C und 130°C, insbesondere zwischen 40°C und 100°C durchgeführt.

Die erfindungsgemäßen 1. und 2. Verfahrensschritte werden unabhängig voneinander vorzugsweise bei einem Druck von 100 bis 2000 hPa, besonders bevorzugt bei 900 bis 1100 hPa, durchgeführt.

Vorzugsweise wird der Alkohol (A) der Formel (IV) im 2. Verfahrensschritt in einer Menge eingesetzt, dass auf jede nach dem 1. Verfahrensschritt verbliebene Isocyanatgruppe mindestens 1,20, besonders bevorzugt mindestens 1,5, insbesondere bevorzugt mindestens 1,8, Hydroxylgruppen im Alkohol (A) kommen.

Dabei ist es nicht erforderlich, den Gehalt an Isocyanatgruppen vor dem 2. Verfahrensschritt analytisch zu bestimmen. Einfacher ist es, die Menge an verbliebenen Isocyanatgruppen aus dem im 1. Verfahrensschritt eingesetzten Überschuss der isocyanatfunktionellen Silane (IS) der Formel (III) zu berechnen. Vorzugsweise beziehen sich die oben genannten bevorzugten, besonders bevorzugten und insbesondere bevorzugten Einsatzmengen des Alkohols (A) im zweiten Verfahrensschritt auf diese berechneten Mengen an Isocyanatgruppen.

Vorzugsweise wird das Reaktionsgemisch während des erfindungsgemäßen 3. Verfahrensschrittes in der Verdampfereinheit (VD) einem Druck von höchstens 20 mbar, besonders bevorzugt von höchstens 10 mbar, insbesondere von höchstens 5 mbar, ausgesetzt.

Vorzugsweise wird das Reaktionsgemisch während des erfindungsgemäßen 3. Verfahrensschrittes in der Verdampfereinheit (VD) einer Temperatur von höchstens 180°C, besonders bevorzugt von höchstens 160°C, insbesondere von höchstens 140°C, ausgesetzt.

Vorzugsweise wird der erfindungsgemäße 3. Verfahrensschritt so durchgeführt, dass das Reaktionsgemisch in der Verdampfungseinheit (VD) eine mittlere Verweilzeit von höchstens 20 Minuten, besonders bevorzugt von höchstens 10 Minuten, insbesondere bevorzugt von höchstens 5 Minuten, aufweist.

Sämtliche erfindungsgemäße Verfahrensschritte werden vorzugsweise in Schutzgas-Atmosphäre, bevorzugt Argon oder Stickstoff, durchgeführt.

Selbstverständlich kann das erfindungsgemäße Verfahren neben den erfindungsgemäßen Verfahrensschritten 1 bis 3 auch noch weitere Verfahrensschritte aufweisen, die prinzipiell auch zwischen den Verfahrensschritten 1 bis 3 durchgeführt werden können. Vorzugsweise weist das erfindungsgemäße Verfahren jedoch außer den erfindungsgemäßen 1. bis 3. Verfahrensschritten keine weiteren Verfahrensschritte auf.

Das erfindungsgemäße Verfahren kann kontinuierlich durchgeführt werden, z.B. in dem die 1. und 2. Verfahrensschritte jeweils in einem oder mehreren Röhrenreaktoren oder Loop-Reaktoren, in hintereinander geschalteten Kaskaden mehrerer Rührreaktoren oder auch nur in jeweils nur einem Rührreaktor, dem kontinuierlich neue Edukte zugeführt werden, während gleichzeitig kontinuierlich Reaktionsmischung entnommen wird, durchgeführt werden. Auch Kombinationen mehrerer Reaktortypen sind vorstellbar. Der 2. Reaktionsschritt kann dabei auch in einem ungerührten Reaktor bzw. (Zwischen)-Tank erfolgen, sofern die notwendige Durchmischung aller für diesen Schritt notwendigen Rohstoffe zuvor in einer geeigneten Mischeinheit stattgefunden hat.

Dabei werden im 1. Reaktionsschritt die Verbindungen (OHP) und (IS) und gegebenenfalls Katalysator (K) bevorzugt gemeinsam dosiert und vor oder in der jeweils verwendeten Reaktoreinheit vermischt. Der dabei erhaltenen

Reaktionsmischung wird dann im 2. Reaktionsschritt ebenfalls wieder vor oder in der jeweils verwendeten Reaktoreinheit der Alkohol (A) zugegeben. Eine erneute Zugabe von Katalysator (K) ist möglich, aber nicht bevorzugt, weil der im 1. Verfahrensschritt verwendete Katalysator zur Katalyse des 2. Verfahrensschrittes dienen kann.

Der erfindungsgemäße 3. Reaktionsschritt wird dann vorzugsweise ebenfalls kontinuierlich in der Verdampfungseinheit (VD) durchgeführt. Hier kann es sinnvoll sein, wenn die Anlage zur Durchführung des erfindungsgemäßen Verfahrens über einen Puffertank verfügt, aus dem das Reaktionsgemisch mit konstanter Geschwindigkeit in die jeweils verwendet Verdampfereinheit (VD) dosiert wird. Selbstverständlich ist es auch möglich, den 3. Verfahrensschritt zeitlich und/oder räumlich getrennt von den ersten beiden Verfahrensschritten durchzuführen.

Ebenso kann das erfindungsgemäße Verfahren auch diskontinuierlich durchgeführt werden, z.B. in einem Rührreaktor, in dem zunächst im 1. Verfahrensschritt die Komponenten (OHP) und (IS) gegebenenfalls in Gegenwart von Katalysator (K) miteinander zur Reaktion gebracht werden und anschließend im 2. Verfahrensschritt Alkohol (A) zudosiert wird. Eine erneute Dosierung eines Katalysators (K) im 2. Verfahrensschritt ist möglich, aber nicht bevorzugt.

Eine Variante des erfindungsgemäßen diskontinuierlichen Verfahrens kann auch die Durchführung des 1. Verfahrensschrittes in einem ersten Reaktor, z.B. einem Rührkessel, und die Durchführung des 2. Verfahrensschrittes in einem zweiten Reaktor vorsehen. Ebenso wie beim kontinuierlichen Verfahren muss dieser zweite Reaktor nicht zwingend gerührt werden, wenn die jeweiligen Edukte zuvor in einer separaten Mischeinheit gut vermischt wurden. Daher kann auch hier ein (Zwischen)-Tank als Reaktor für den zweiten Reaktionsschritt dienen.

Der erfindungsgemäße 3. Verfahrensschritt wird auch im Falle einer diskontinuierlichen Durchführung der ersten beiden Verfahrensschritte vorzugsweise kontinuierlich in einer Verdampfereinheit (VD) durchgeführt. Die Dosierung der Reaktionsmischung in die jeweils verwendete Verdampfereinheit (VD) erfolgt in diesem Falle vorzugsweise aus einem Zwischen- oder Puffertank vorzugsweise mit konstanter Geschwindigkeit. Selbstverständlich ist es auch in diesem Fall möglich, den 3. Verfahrensschritt zeitlich und/oder räumlich getrennt von den ersten beiden Verfahrensschritten durchzuführen.

Falls die im 2. Verfahrensschritt erhaltene Reaktionsmischung noch Alkohol (A) enthält, wird dieser zusammen mit dem Carbamatosilan (CS) der Formel (V) im 3. Verfahrensschritt aus der Reaktionsmischung weitgehend bzw. sogar vollständig entfernt. Die erfindungsgemäße Reaktionsmischung enthält daher nach dem 3. Verfahrensschritt bevorzugt höchstens 3 Gew.-%, besonders bevorzugt höchstens 0,1 Gew.-%, insbesondere höchstens 0,05 Gew.-%, Alkohol (A) jeweils bezogen auf das Gesamtgewicht der Reaktionsmischung.

Der gegebenenfalls eingesetzte Katalysator (K) verbleibt vorzugsweise in der Reaktionsmischung. Nach dem 3. Verfahrensschritt findet vorzugsweise keine weitere Aufarbeitung der Reaktionsmischung mehr statt.

Das erfindungsgemäße Verfahren hat den Vorteil, dass es schnell und einfach in der Durchführung ist, wobei leicht verfügbare Rohstoffe als Edukte eingesetzt werden können.

Das erfindungsgemäße Verfahren hat den Vorteil, dass die erhaltene Polymermischung frei von toxikologischen Isocyanatosilanen ist.

Das erfindungsgemäße Verfahren hat den Vorteil, dass die erhaltene Polymermischung frei von oder sehr arm an monomeren Carbamatosilanen (CS) ist, die die mechanischen Eigenschaften der aus dieser Polymermischung herstellbaren Kleb-, Dicht- oder Beschichtungsstoffe beeinflussen können.

Des Weiteren besitzt das erfindungsgemäße Verfahren den Vorteil, dass die entsprechend hergestellten silanvernetzbaren Polymere vergleichsweise lagerstabil sind und ohne Zugabe eines zusätzlichen Härtungskatalysators nur sehr langsam mit Luftfeuchtigkeit reagieren. Dies erleichtert nicht nur ihre Lagerung, sondern auch ihre Weiterverarbeitung.

Ein weiterer Vorteil des erfindungsgemäßen Verfahrens ist, dass die hergestellten Polymere direkt weiterverwendet werden können, z.B. bei der Herstellung von vernetzbaren Massen.

Die erfindungsgemäß hergestellten silanterminierten Polymere können überall dort eingesetzt werden, wo auch bisher silanterminierte Polymere eingesetzt wurden.

Insbesondere eignen sie sich zur Verwendung in vernetzbaren Massen, insbesondere in raumtemperaturhärtbaren Kleb- und Dichtstoffen sowie in Beschichtungen. Die Herstellung von silanvernetzenden Beschichtungen, Kleb- und Dichtstoffen aus entsprechenden Polymeren ist in der Literatur bereits vielfach beschrieben, z.B. in EP-A 1535940 A (Absatz [0032]-[0054] sowie Beispiele 5-7), WO 13079330 A2 (Seite 27, Zeile 10 bis Seite 40, Zeile 7 sowie Beispiele 3-7, 9, 10), WO 13026654 A1 (Seite 17, Zeile 28 bis Seite 37, Zeile 24 sowie Beispiele 1-9) oder WO 11131506 A1 (Seite 10, Zeile 9 bis Seite 18, Zeile 34 sowie Beispiele 1-3). Die in diesen Dokumenten beschriebenen feuchtigkeitshärtenden Formulierungen auf Basis von silanterminierten Polymeren, die dabei zum Einsatz kommenden weiteren Inhaltsstoffe, sowie die dort beschriebenen Verfahren zur Herstellung entsprechender Formulierungen sind ebenso zum Offenbarungsgehalt dieser Beschreibung zu rechnen, wie die dort beschriebenen Anwendungen für die fertig formulierten Beschichtungen, Kleb- und Dichtstoffe.

In den nachstehend beschriebenen Beispielen beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1a: Herstellung eines Polypropylenglycols mit Trimethoxysilylpropylendgruppen und einer mittleren Molmasse von 12 000 g/mol

In einem 500 ml Reaktionsgefäß mit Rühr-, Kühl- und Heizmöglichkeiten werden 400,0 g (33,33 mMol) eines hydroxyterminierten Polypropylenglycols mit einer mittleren Molmasse Mₙ von 12 000 g/Mol (käuflich erhältlich unter der Bezeichnung Acclaim 12200 von der Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 16,42 g (80,00 mmol) Isocyanatopropyl-trimethoxysilan (käuflich erhältlich unter der Bezeichnung GENIOSIL^{®} GF40 von der Wacker Chemie AG, D-München) zugetropft und anschließend 0,62 g Borchi-Katalysator 315 (ein bismut-neodecanoat-haltiger Katalysator der Fa. Borchers) mittels einer Eppendorf-Pipette zugegeben. Dies entspricht einem Wert von 150 Gew.-ppm Katalysator bezogen auf das Gesamtgewicht der Reaktionsmischung. Direkt nach der Katalysatorzugabe kommt es zu einer Erwärmung der Reaktionsmischung auf 83-84°C. Danach wird bei einer Temperatur von 80°C gerührt.

Nach 60 min wird auf 60 °C abgekühlt, und es werden 0,64 g (20,00 mmol) Methanol zugegeben. Anschließend wird für weitere 30 min gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

Schließlich wird die Probe mit einer Dosiergeschwindigkeit von 160 g/h durch einen Kurzwegverdampfer mit Teflonwischern und innen liegender Kühlschleife geleitet. Der Kurzwegverdampfer hat einen Durchmesser von 8 cm und eine Länge von 26 cm. Die Wandtemperatur des Kurzwegverdampfers beträgt 130 °C und der angelegte Druck 1 mbar. Das Endprodukt wird im Sumpfablauf des Kurzwegverdampfers gesammelt. Die Ausbeute ist mit 411 g nahezu quantitativ.

### Beispiel 1b: Herstellung eines Polypropylenglycols mit Trimethoxysilylpropylendgruppen und einer mittleren Molmasse von 12 000 g/mol

Es wird ebenso vorgegangen in Beispiel 1a, wobei die folgenden Änderungen vorgenommen werden:
- Zwischen 2. Verfahrensschritt (Reaktion mit Methanol) und 3. Verfahrensschritt (Dünnschichtung) wird der Reaktionsmischung eine Probe von 50 g entnommen.
- Während des nachfolgenden Dünnschichtschrittes der verbleibenden Reaktionsmischung wird der Kurzwegverdampfer mit einer Wandtemperatur von 110 °C betrieben.

### Vergleichsbeispiel 1c(V): Herstellung eines Polypropylenglycols mit Trimethoxysilylpropylendgruppen und einer mittleren Molmasse von 12 000 g/mol

Es handelt sich um die 50 g-Probe, die in Beispiel 1b der Reaktionsmischung vor dem finalen Dünnschichtschritt entnommen wurde.

### Vergleichsbeispiel 1d(V): Herstellung eines Polypropylenglycols mit Trimethoxysilylpropylendgruppen und einer mittleren Molmasse von 12 000 g/mol

Es wird ebenso vorgegangen in Beispiel 1a, wobei die folgenden Änderungen vorgenommen werden:
- Anstelle des letzten Dünnschichtschrittes wird eine Batch-Destillation durchgeführt. Zu diesem Zweck wird der Reaktionskolben, in dem die Verfahrensschritte 1 und 2 durchgeführt wurden, mit einem Claisenkühler versehen. Danach wird der Druck auf 1 mbar reduziert und die Reaktionsmischung auf 130 °C erwärmt. Die Vakuumdestillation wird für eine Zeitdauer von 1 h unter intensiver Rührung der Reaktionsmischung durchgeführt, anschließend wird eine Probe genommen.
- Danach wird die Vakuumdestillation für eine weitere Stunde fortgesetzt und erneut eine Probe genommen.

### Vergleichsbeispiel 1e(V): Herstellung eines Polypropylenglycols mit Trimethoxysilylpropylendgruppen und einer mittleren Molmasse von 12 000 g/mol

Es wird ebenso vorgegangen in Beispiel 1d(V), wobei die folgende Änderung vorgenommen wird:
- Die Vakuumdestillation wird bei einer Temperatur von 160 °C anstelle von 130 °C durchgeführt.

### Beispiel 2: Bestimmung von Eigenschaften der erhaltenen Polymermischungen.

Viskositäten werden nach dem in der Beschreibung beschriebenen Verfahren bestimmt.

Hazen-Farbzahlen werden entsprechend der ISO 6271, Teil 2 bestimmt.

Der Gehalt an Carbamatosilan (N-(3-Trimethoxysilylpropyl)-O-methyl-carbamat) wird über ein GC-Headspace-Verfahren bestimmt. Dieses Verfahren wird durch zwei Probleme verkompliziert:
1. Da der Carbamatosilangehalt sehr gering und stark von der Zusammensetzung der Matrix abhängt, ist unsicher, ob für alle Proben eine einheitliche Eichgerade verwendet werden kann.
2. Für die Erstellung einer Eichgerade existiert keine "Nullprobe" (d.h. eine Probe gänzlich ohne Carbamatosilan) da geringe Carbamatosilanmengen auch ohne Methanolzugabe bereits während des ersten Syntheseschrittes (d.h. der Reaktion aus Polymer und Isocyanatosilan) als Nebenprodukt gebildet werden.

Daher hat sich ein Verfahren bewährt, bei der jeder zu analysierenden Polymermischung jeweils drei 50 g-Proben entnommen werden, von denen eine unverändert bleibt, eine mit 0,30 Gew.-% Carbamatosilan und eine mit 0,60 Gew.-% Carbamatosilan versetzt wird. Werden diese drei Proben anschließend mittels Headspace-GC vermessen, werden durch Integration der jeweiligen Carbamatosilan-Peaks drei Gleichungen mit zwei Unbekannten erhalten (A1 = x * c; A2 = x * (c + 0,3); A3 = x * (c + 0,6), wobei A1, A2, A3 die integrierten Peakflächen darstellen, x den Proportionalitätsfaktor darstellt und c für die gesuchte Carbamatosilankonzentration steht). Der Carbamatosilanpeak ist dabei leicht zu erkennen, da es der einzige Peak ist, durch den sich die GC-Spektren der drei Proben signifikant unterscheiden.

Da bereits zwei Gleichungen mit zwei Unbekannten mathematisch lösbar sind, können hier durch die verschiedenen Kombinationsmöglichkeiten drei Lösungen für die Konzentration c errechnet werden. Diese müssen natürlich im Rahmen der Messgenauigkeit, d.h. mit einer Fehlertoleranz des Carbamatosilangehaltes, die bei ± 10% des jeweiligen Messwertes liegt, zu demselben Ergebnis führen. Sollte dies nicht der Fall sein, muss die Messung wiederholt werden.

Anmerkung: Da die oben beschriebene exakte Dosierung so kleiner Carbamatosilanmengen in der Praxis nicht einfach ist, kann auch mit geringfügig abweichenden Dosiermenge gearbeitet werden. Diese Abweichung muss lediglich vermerkt und der exakt dosierte Wert in die entsprechende Gleichung eingetragen werden. D.h., wurden beispielsweise anstelle der beabsichtigten 0,30 Gew.-% versehentlich 0,32 Gew.-% dosiert, kann die Messung trotzdem fortgesetzt werden. Bei der abschließenden Berechnung muss die entsprechende Gleichung dann jedoch A2 = x * (c + 0,32) lauten.

Zur Durchführung der Headspace-Messung wird eine 0,5 g Probe in einem 20 ml Headspacefläschchen eingewogen, wobei das Fläschchen vor dem Verschließen für ca. 30 s vorsichtig mit Stickstoff ausgeblasen wird. Anschließend wird das Fläschchen für 30 min auf 150 °C erhitzt, woraufhin das über der Probe befindliche Gasgemisch über eine 170 °C heiße Transferkapillare direkt in das GC geleitet wird. Für sämtliche Proben werden jeweils Doppelbestimmungen durchgeführt. Mit den in den Beispielen 1a bis 1e hergestellten Polymermischungen werden die folgenden in Tabelle 1 dargestellten Ergebnisse erhalten.

**Tabelle 1:**

| Beispiel | 1a | 1b | 1c (V) | 1d (V) 1 h* | 1d (V) 2 h* | 1e (V) 1 h* | 1e (V) 2 h* |
|---|---|---|---|---|---|---|---|
| Temperatur bei Schritt 3 [°C] | 130 | 110 | -- | 130 | 130 | 160 | 160 |
| Viskosität [Pas] | 7,3 | 7,2 | 7,1 | 7,2 | 7,1 | 7,3 | 7,5 |
| Farbzahl Hazen | 18 | 17 | 17 | 31 | 42 | 88 | 102 |
| Gehalt Carbamatosilan [Gew.-%] | 0,011 | 0, 024 | 0,70 | 0, 68 | 0, 64 | 0,50 | 0,41 |

| | | | | | | | |
|---|---|---|---|---|---|---|---|
| * Die mit "1 h" gekennzeichneten Beispiele beschreiben die Probe nach einer Destillationsdauer von einer 1 h und die mit "2 h" gekennzeichneten Beispiele die Probe nach einer Destillationsdauer von 2 h. | | | | | | | |

### Beispiel 3: Herstellung eines Polypropylenglycols mit Trimethoxysilylpropylendgruppen und einer mittleren Molmasse von 18 000 g/mol

Es wird ebenso vorgegangen in Beispiel 1b, wobei die folgenden Änderungen vorgenommen werden:
- Anstelle von 400,0 g eines hydroxyterminierten Polypropylenglycols mit einer mittleren Molmasse Mₙ von 12 000 g/Mol werden 400,0 g (22,22 mmol) eines hydroxyterminierten Polypropylenglycols mit einer mittleren Molmasse Mₙ von 18 000 g/Mol (käuflich erhältlich unter der Bezeichnung Acclaim 18200 von der Covestro AG, D-Leverkusen) eingesetzt.
- Anstelle von 16,42 g (80,00 mmol) Isocyanatopropyl-trimethoxysilan werden 10,95 g (53,33 mmol) desselben Isocyanatosilans zugetropft.
- Anstelle von 0,64 g (20,00 mmol) Methanol werden nur 0,43 g (13,33 mmol) Methanol eingesetzt.
- Nach Abschluss des 2. Verfahrensschritts (= Umsetzung mit Methanol) wird eine 50 Gramm-Probe ("Probe 1") entnommen.
- Die verbleibende Produktmenge wird wie in Beispiel 1b beschrieben dem 3. Verfahrensschritt (Dünnschichtung bei 110 °C) unterzogen. Das dabei erhaltene Produkt wird als "Probe 2" bezeichnet.

Alle übrigen Parameter bleiben unverändert.

### Beispiel 4: Bestimmung von Eigenschaften der erhaltenen Polymermischungen.

Viskositäten, Hazen-Farbzahlen und Gehalte an Carbamatosilan (N-(3-Trimethoxysilylpropyl)-O-methyl-carbamat) werden ebenso bestimmt wie in Beispiel 2 beschrieben.

Mit den in Beispiel 3 erzeugten Proben werden die folgenden in Tabelle 2 dargestellten Ergebnisse erhalten.

**Tabelle 2:**

| Beispiel 3 | Probe 1 (Vergleich) | Probe 2 |
|---|---|---|
| Temperatur bei Schritt 3 [°C] | - | 110 |
| Viskosität [Pas] | 26,3 | 26,5 |
| Farbzahl Hazen | 13 | 13 |
| Gehalt Carbamatosilan [Gew.-%] | 0,49 | 0, 039 |

### Beispiel 5: Herstellung eines Polypropylenglycols mit alpha-Methyldimethoxysilylmethylendgruppen und einer mittleren Molmasse von 12 000 g/mol

Es wird ebenso vorgegangen in Beispiel 1a, wobei die folgenden Änderungen vorgenommen werden:
- Anstelle von 16,42 g (80,00 mmol) Isocyanatopropyl-trimethoxysilan werden 12,90 g (80,00 mmol) alpha-Isocyanatomethyl-methyl-dimethoxysilan (käuflich erhältlich unter der Bezeichnung GENIOSIL^{®} XL 42 von der Wacker Chemie AG, D-München) eingesetzt.
- Nach Abschluss des 2. Verfahrensschritts (= Umsetzung mit Methanol) wird eine 50 Gramm-Probe ("Probe 1") entnommen.
- Die verbleibende Produktmenge wird wie in Beispiel 1a beschrieben dem 3. Verfahrensschritt (Dünnschichtung) unterzogen, wobei der Kurzwegverdampfer mit einer Wandtemperatur von 90 °C betrieben wird. Das dabei erhaltene Produkt wird als "Probe 2" bezeichnet.

Alle übrigen Parameter bleiben unverändert.

### Beispiel 6: Bestimmung von Eigenschaften der erhaltenen Polymermischungen.

Viskositäten und Hazen-Farbzahlen der Proben aus Beispiel 5 werden ebenso bestimmt wie in Beispiel 2 beschrieben. Die Bestimmung des Gehaltes an alpha-N-(Methyl-dimethoxysilylmethyl)-O-methyl-carbamat erfolgt äquivalent zu der in Beispiel 2 beschriebenen Bestimmung für Carbamatosilane. Der einzige Unterschied besteht in der Tatsache, dass selbstverständlich der Headspace-GC-Peak für das hier zu bestimmende Carbamatosilan analysiert wird.

Mit den in Beispiel 5 erzeugten Proben werden die folgenden in Tabelle 3 dargestellten Ergebnisse erhalten.

**Tabelle 3:**

| Beispiel 5 | Probe 1 (Vergleich) | Probe 2 |
|---|---|---|
| Temperatur bei Schritt 3 [°C] | - | 90 |
| Viskosität [Pas] | 7,1 | 7,1 |
| Farbzahl Hazen | 8 | 8 |
| Gehalt Carbamatosilan [Gew.-%] | 0,59 | 0, 057 |

### Beispiel 7: Herstellung eines Polypropylenglycols mit alpha-Methyldimethoxysilylmethylendgruppen und einer mittleren Molmasse von 18 000 g/mol

Es wird ebenso vorgegangen in Beispiel 5, wobei die folgenden Änderungen vorgenommen werden:
- Anstelle von 400,0 g eines hydroxyterminierten Polypropylenglycols mit einer mittleren Molmasse Mₙ von 12 000 g/Mol werden 400,0 g (22,22 mMol) eines hydroxyterminierten Polypropylenglycols mit einer mittleren Molmasse Mₙ von 18 000 g/Mol (käuflich erhältlich unter der Bezeichnung Acclaim 18200 von der Covestro AG, D-Leverkusen) eingesetzt.
- Anstelle von 12,90 g (80,00 mmol) alpha-Isocyanatomethylmethyl-dimethoxysilan werden 8,60 g (53,33 mmol) desselben Isocyanatosilans zugetropft.
- Anstelle von 0,64 g (20,00 mmol) Methanol werden nur 0,43 g (13,33 mmol) Methanol eingesetzt.
- Wie in Beispiel 5 wird auch hier nach Abschluss des 2. Verfahrensschritts (= Umsetzung mit Methanol) eine 50 Gramm-Probe ("Probe 1") entnommen.
- Die verbleibende Produktmenge wird wie in Beispiel 1b beschrieben dem 3. Verfahrensschritt (Dünnschichtung bei 110 °C) unterzogen. Das dabei erhaltene Produkt wird als "Probe 2" bezeichnet.

Alle übrigen Parameter bleiben unverändert.

### Beispiel 8: Bestimmung von Eigenschaften der erhaltenen Polymermischungen.

Viskositäten, Hazen-Farbzahlen und Gehalte an Carbamatosilan (alpha-N-(Methyl-dimethoxysilylmethyl)-O-methyl-carbamat) werden ebenso bestimmt wie in Beispiel 2 beschrieben.

Mit den in Beispiel 7 erzeugten Proben werden die folgenden in Tabelle 4 dargestellten Ergebnisse erhalten.

**Tabelle 4:**

| Beispiel 7 | Probe 1 (Vergleich) | Probe 2 |
|---|---|---|
| Temperatur bei Schritt 3 [°C] | - | 110 |
| Viskosität [Pas] | 26,2 | 26,2 |
| Farbzahl Hazen | 9 | 9 |
| Gehalt Carbamatosilan [Gew.-%] | 0,40 | 0, 050 |

## Patentansprüche

1. Verfahren zur Herstellung von silanterminierten Polymeren (SP) der Formel (I)
Y-[O-C(=O)-NH-(CR¹₂)_{b}-SiRₐ(OR²)₃₋ₐ]ₓ (I),
**dadurch gekennzeichnet, dass**
in einem 1. Verfahrensschritt mindestens ein Polymer (OHP) der Formel (II)
Y-[OH]ₓ (II)
mit mindestens einem isocyanatfunktionellen Silan (IS) der Formel (III)
O=C=N-(CR¹₂)_{b}-SiRₐ(OR²)₃₋ₐ (III)
umgesetzt wird, mit der Maßgabe, dass die isocyanatfunktionellen Silane (IS) in einer Menge eingesetzt werden, dass auf jede Hydroxylgruppe in den Verbindungen (OHP) mindestens 1,05 Isocyanatgruppen in den Silanen (IS) kommen,
wobei
Y einen x-wertigen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt,
R² gleich oder verschieden sein kann und Wasserstoffatom oder einen einwertigen, gegebenenfalls substituierten Kohlenwasserstoffrest darstellt,
x eine ganze Zahl von 1 bis 50 ist,
a gleich oder verschieden sein kann und 0, 1 oder 2 ist und
b gleich oder verschieden sein kann und eine ganze Zahl von 1 bis 10 ist,
anschließend in einem 2. Verfahrensschritt die nicht abreagierten Isocyanatgruppen der Silane (IS) in dem im 1. Verfahrensschritt erhaltenen Reaktionsgemisch mit mindestens einem Alkohol (A) der Formel (IV)
R³OH (IV),
umgesetzt werden, wobei
R³ einen Kohlenwasserstoffrest mit 1 bis 4 Kohlenstoffatomen darstellt,
und anschließend in einem 3. Verfahrensschritt das im 2. Verfahrensschritt erhaltene Reaktionsgemisch durch eine Verdampfungseinheit (VD) geleitet wird, in der das Reaktionsgemisch in einer Schichtdicke von maximal 5 cm einem Druck von höchstens 80 mbar und Temperaturen von höchstens 200°C ausgesetzt wird, wobei das im 2. Verfahrensschritt gebildete Carbamatosilan (CS) der Formel (V)
R**³**O-C(=O)-NH-(CR¹₂)_{b}-SiRₐ(OR²)₃₋ₐ (V),
bei der alle Variablen die oben genannte Bedeutung aufweisen, zumindest teilweise verdampft und entfernt wird.

2. Verfahren nach Anspruch 1, **dadurch gekennzeichnet, dass** der Carbamatosilangehalt in der nach dem erfindungsgemäßen Verfahren erhaltenen Reaktionsmischung höchstens 0,3 Gew.-% beträgt, bezogen auf das Gesamtgewicht der Reaktionsmischung.

3. Verfahren nach Anspruch 1, **dadurch gekennzeichnet, dass** der Carbamatosilangehalt in der nach dem erfindungsgemäßen Verfahren erhaltenen Reaktionsmischung höchstens 0,1 Gew.-% beträgt, bezogen auf das Gesamtgewicht der Reaktionsmischung.

4. Verfahren nach einem oder mehreren der Ansprüche 1 bis 3, **dadurch gekennzeichnet, dass** das Isocyanatosilan (IS) im 1. Verfahrensschritt in einer Menge eingesetzt wird, dass auf jede Hydroxylgruppe des Polymers (OHP) mindestens 1,10 Isocyanatgruppen in den Verbindungen (IS) kommen.

5. Verfahren nach einem oder mehreren der Ansprüche 1 bis 4, **dadurch gekennzeichnet, dass** der 1. und der 2. Verfahrensschritt in Gegenwart eines Katalysators (K) durchgeführt werden.

6. Verfahren nach einem oder mehreren der Ansprüche 1 bis 5, **dadurch gekennzeichnet, dass** der 3. Verfahrensschritt so durchgeführt wird, dass das Reaktionsgemisch in der Verdampfungseinheit (VD) eine mittlere Verweilzeit von höchstens 20 Minuten aufweist.

7. Verfahren nach einem oder mehreren der Ansprüche 1 bis 6, **dadurch gekennzeichnet, dass** das Reaktionsgemisch während des 3. Verfahrensschrittes in der Verdampfereinheit (VD) einer Temperatur von höchstens 180°C ausgesetzt ist.

8. Verfahren nach einem oder mehreren der Ansprüche 1 bis 7, **dadurch gekennzeichnet, dass** sämtliche Verfahrensschritte in Schutzgas-Atmosphäre durchgeführt werden.

## Claims

1. Process for preparing silane-terminated polymers (SP) of the formula (I)
Y-[O-C(=O)-NH-(CR¹₂)_{b}-S1Rₐ(OR²)₃₋ₐ]ₓ (I),
**characterized in that**
in a 1^{st} process step at least one polymer (OHP) of the formula (II)
Y-[OH]ₓ (II)
is reacted with at least one isocyanate-functional silane (IS) of the formula (III)
O=C=N-(CR¹₂)_{b}-SiRₐ(OR²)₃₋ₐ (III)
with the proviso that the isocyanate-functional silanes (IS) are used in an amount such that there are at least 1.05 isocyanate groups in the silanes (IS) to each hydroxyl group in the compounds (OHP),
where
Y is an x-valent polymer radical,
R may be identical or different and is a monovalent, optionally substituted hydrocarbon radical,
R¹ may be identical or different and is hydrogen atom or a monovalent, optionally substituted hydrocarbon radical,
R² may be identical or different and is hydrogen atom or a monovalent, optionally substituted hydrocarbon radical,
x is an integer from 1 to 50,
a may be identical or different and is 0, 1 or 2, and
b may be identical or different and is an integer from 1 to 10,
subsequently in a 2^{nd} process step the unreacted isocyanate groups of the silanes (IS) are reacted, in the reaction mixture obtained in the 1^{st} process step, with at least one alcohol (A) of the formula (IV)
R³OH (IV),
where
R³ is a hydrocarbon radical having 1 to 4 carbon atoms, and subsequently in a 3^{rd} process step the reaction mixture obtained in the 2^{nd} process step is passed through an evaporation unit (VD) in which the reaction mixture in a layer thickness of not more than 5 cm is exposed to a pressure of at most 80 mbar and temperatures of at most 200°C, with the carbamatosilane (CS) formed in the 2^{nd} process step, of the formula (V)
R**³**O-C(=O)-NH-(CR¹₂)_{b}-SiRₐ(OR²)₃₋ₐ (V),
in which all the variables have the definition stated above, being at least partly evaporated and removed.

2. Process according to Claim 1, **characterized in that** the carbamatosilane content in the reaction mixture obtained after the process of the invention is at most 0.3 wt%, based on the total weight of the reaction mixture.

3. Process according to Claim 1, **characterized in that** the carbamatosilane content in the reaction mixture obtained after the process of the invention is at most 0.1 wt%, based on the total weight of the reaction mixture.

4. Process according to one or more of Claims 1 to 3, **characterized in that** the isocyanatosilane (IS) is used in the 1^{st} process step in an amount such that there are at least 1.10 isocyanate groups in the compounds (IS) for each hydroxyl group of the polymer (OHP).

5. Process according to one or more of Claims 1 to 4, **characterized in that** the 1^{st} and 2^{nd} process steps are carried out in the presence of a catalyst (K).

6. Process according to one or more of Claims 1 to 5, **characterized in that** the 3^{rd} process step is carried out such that the reaction mixture has a mean residence time in the evaporation unit (VD) of at most 20 minutes.

7. Process according to one or more of Claims 1 to 6, **characterized in that** the reaction mixture during the 3^{rd} process step in the evaporator unit (VD) is exposed to a temperature of at most 180°C.

8. Process according to one or more of Claims 1 to 7, **characterized in that** all the process steps are carried out under inert gas atmosphere.

## Revendications

1. Procédé pour la préparation de polymères terminés par silane (SP) de formule (I)
Y-[O-C(=O)-NH-(CR¹₂)_{b}-SiRₐ(OR²)₃₋ₐ]ₓ (I),
**caractérisé en ce que**, dans une 1ère étape de procédé, on transforme au moins un polymère (OHP) de formule (II)
Y-[OH]x (II)
avec au moins silane à fonctionnalité isocyanate (IS) de formule (III)
O=C=N-(CR¹₂)_{b}-S1Rₐ(OR²)₃₋ₐ (III)
sous réserve que les silanes à fonctionnalité isocyanate (IS) sont utilisés en une quantité telle qu'au moins 1,05 groupe isocyanate pour chaque groupe hydroxyle dans les composés (OHP) entre dans les silanes (IS),
Y signifiant un radical polymère x-valent,
R pouvant être identique ou différent et représentant un radical hydrocarboné monovalent, le cas échéant substitué,
R¹ pouvant être identique ou différent et représentant un atome d'hydrogène ou un radical hydrocarboné monovalent, le cas échéant substitué,
R² pouvant être identique ou différent et représentant un atome d'hydrogène ou un radical hydrocarboné monovalent, le cas échéant substitué,
x valant un nombre entier de 1 à 50,
a pouvant être identique ou différent et valant 0, 1 ou 2 et
b pouvant être identique ou différent et représentant un nombre entier de 1 à 10,
ensuite, dans une 2ème étape de procédé, on transforme les groupes isocyanate qui n'ont pas réagi des silanes (IS) dans le mélange réactionnel obtenu dans la 1ère étape de procédé avec au moins un alcool (A) de formule (IV)
R³OH (IV),
dans laquelle
R³ représente un radical hydrocarboné comprenant 1 à 4 atomes de carbone,
et ensuite, dans une 3ème étape de procédé, on fait passer le mélange réactionnel obtenu dans la 2ème étape de procédé à travers une unité d'évaporation (VD), dans laquelle le mélange réactionnel est soumis, en une épaisseur de couche d'au maximum 5 cm, à une pression d'au plus 80 mbars et à des températures d'au plus 200°C, le carbamatosilane (CS) formé dans la 2ème étape de procédé de formule (V)
R³O-C(=O)-NH-(CR¹₂)_{b}-SiRₐ(OR²)₃₋ₐ (V),
dans laquelle toutes les variables présentent la signification susmentionnée, étant au moins partiellement évaporé et éliminé.

2. Procédé selon la revendication 1, **caractérisé en ce que** la teneur en carbamatosilane dans le mélange réactionnel obtenu selon le procédé selon l'invention est d'au plus 0, 3% en poids, par rapport au poids total du mélange réactionnel.

3. Procédé selon la revendication 1, **caractérisé en ce que** la teneur en carbamatosilane dans le mélange réactionnel obtenu selon le procédé selon l'invention est d'au plus 0,1% en poids, par rapport au poids total du mélange réactionnel.

4. Procédé selon l'une ou plusieurs des revendications 1 à 3, **caractérisé en ce que** l'isocyanatosilane (IS) dans la 1ère étape de procédé est utilisé en une quantité telle qu'au moins 1,10 groupe isocyanate pour chaque groupe hydroxyle du polymère (OHP) entre dans les composés (IS).

5. Procédé selon l'une ou plusieurs des revendications 1 à 4, **caractérisé en ce que** la 1ère et la 2ème étape de procédé sont effectuées en présence d'un catalyseur (K).

6. Procédé selon l'une ou plusieurs des revendications 1 à 5, **caractérisé en ce que** la 3ème étape de procédé est effectuée de manière telle que le mélange réactionnel présente un temps de séjour moyen d'au plus 20 minutes dans l'unité d'évaporation (VD).

7. Procédé selon l'une ou plusieurs des revendications 1 à 6, **caractérisé en ce que** le mélange réactionnel est soumis à une température d'au plus 180°C pendant la 3ème étape de procédé dans l'unité d'évaporation (VD).

8. Procédé selon l'une ou plusieurs des revendications 1 à 7, **caractérisé en ce que** toutes les étapes de procédé sont effectuées dans une atmosphère de gaz de protection.
